# FASCICULE DE BREVET EUROPEEN

(11) **EP 3 391 694 B1**
(45) Date de publication et mention de la délivrance du brevet: **12.02.2020**
(21) Numéro de dépôt: 16815883.0
(22) Date de dépôt: 24.11.2016
(51) Int. Cl.: H04W 64/00, H04L 29/12, H04W 84/12, H04W 88/08

(54) **PROCÉDÉ ET DISPOSITIF DE FOURNITURE D'UNE INFORMATION DE LOCALISATION À UN ÉQUIPEMENT CONNECTÉ À UN POINT D'ACCÈS RÉSEAU**
VERFAHREN UND VORRICHTUNG ZUR VERSORGUNG EINER MIT EINEM NETZWERKZUGANGSPUNKT VERBUNDENEN VORRICHTUNG MIT POSITIONSINFORMATIONEN
METHOD AND DEVICE FOR SUPPLYING LOCATION INFORMATION TO AN APPARATUS CONNECTED TO A NETWORK ACCESS POINT

(30) Priorité: 17.12.2015 FR 1562650
(43) Date de publication de la demande: 24.10.2018
(73) Titulaire: Orange, 75015 Paris (FR)
(72) Inventeur: BOUVET, Bertrand, 22700 Perros Guirec (FR); BOIZARD, Stéphane, 31620 Fronton (FR)
(86) Numéro de dépôt international: PCT/FR2016/053076
(87) Numéro de publication internationale: WO 2017/103367

(56) Documents cités:
- WO-A1-2007/015068
- WO-A1-2008/065294
- FR-A1- 2 887 723
- US-A1- 2005 148 342
- US-A1- 2009 034 536

## Description

L'invention concerne un procédé de fourniture d'une information de localisation à un objet connecté à un réseau local d'un point d'accès à un réseau de communication.

Les services fournis aux utilisateurs via des terminaux mobiles ou des objets connectés nécessitent de plus en plus de connaître la localisation desdits terminaux ou desdits objets afin de rendre un service adapté à l'utilisateur, et notamment un service géo-localisé.

Par la suite, le terme équipement sera utilisé pour désigner indépendamment un terminal, mobile ou autre, ou tout objet apte à se connecter à un réseau de communication pour rendre un service utilisant ledit réseau de communication, un tel objet est dit objet connecté.

Des services de localisation pour fournir une information de localisation à un équipement sont connus de l'art antérieur. Par exemple, un équipement qui dispose d'une fonctionnalité GPS (pour Global Positionning System) peut obtenir sa localisation en activant cette fonctionnalité. Cependant, cette solution nécessite que l'équipement soit équipé d'un module GPS et l'activation de la localisation par un tel système GPS nécessite des ressources importantes de l'équipement. De plus, le système GPS ne fonctionne pas toujours lorsque l'équipement est situé à l'intérieur d'un bâtiment.

Il est également connu de localiser un terminal mobile lorsque ce terminal mobile est connecté à un réseau de communication mobile 2G/3G/4G. Dans ce cas, la position du terminal mobile peut être déterminée à partir d'un identifiant de cellule radio à laquelle le terminal mobile est attaché pour accéder au réseau de communication mobile. Cependant, cette solution n'est possible que si un réseau de communication mobile est disponible à proximité du terminal mobile et si le terminal mobile dispose d'un module de communication adapté pour s'attacher à un tel réseau. Or, les objets connectés sont en général dépourvus d'un tel module de communication afin de ne pas alourdir le coût de fabrication de ces objets.

Une autre solution pour déterminer la localisation d'un équipement est d'utiliser la localisation d'un point d'accès WIFI lorsque cet équipement accède au réseau de communication via un réseau d'accès WIFI. Cependant, cela nécessite de connaître au préalable la position du point d'accès WIFI, ce qui n'est pas toujours le cas lorsque le point d'accès WIFI via lequel l'équipement se connecte au réseau de communication n'est pas un point d'accès WIFI géré par l'opérateur de l'équipement. De plus, la localisation obtenue pour l'équipement n'est pas très précise et elle n'est pas certifiée par le réseau de communication. Une telle localisation n'est donc pas fiable et en particulier elle ne peut pas être utilisée pour localiser l'équipement dans le cas d'un appel d'urgences émis via l'équipement par un service de voix sur réseau WIFI (autrement appelé VoWIFI). Il existe donc un besoin d'améliorer l'état de la technique.

Le document US 2009/034536 décrit un procédé d'allocation d'une adresse IP à un terminal dans lequel une base de données mémorise l'adresse IP allouée au terminal en association avec un identifiant du terminal ou de l'utilisateur et un identifiant d'un point d'accès via lequel le terminal accède à un réseau d'accès, le point d'accès étant associé à une information de localisation.

Le document US 2005/0148342 décrit un procédé permettant à des terminaux mobiles d'échanger des informations basées sur la localisation lorsqu'ils entrent dans une zone locale sans fil gérée par un point d'accès.

Le document FR 2 887 723 décrit un procédé consistant à insérer dans un champ d'option prédéfini d'une requête DHCP émise par un module client DHCP d'un terminal pour l'obtention de données de configuration, des données optionnelles comprenant un identifiant associé de manière univoque directement ou indirectement à un utilisateur du terminal.Le document WO 2007/015068 décrit l'échange d'information de handover entre une station de base et un réseau cœur via un réseau public tel qu'Internet.

Le document WO 2008/065294 concerne la transmission à un fournisseur de services d'informations fonctionnelles représentatives d'une communication établie via un réseau d'accès entre un fournisseur d'accès et un équipement de terminaison.

L'invention concerne un procédé de fourniture d'une information de localisation à un équipement connecté à un réseau local d'un point d'accès réseau adapté pour donner audit équipement un accès à un réseau de communication auquel le point d'accès est connecté. Le procédé de fourniture, mis en œuvre par ledit point d'accès réseau, comprend les étapes suivantes:
- obtention en provenance d'un serveur du réseau de communication d'une information de localisation dudit point d'accès réseau, ladite information de localisation étant une information de localisation certifiée par l'opérateur du réseau de communication, l'information de localisation certifiée étant obtenue à partir d'un message OFFER selon le protocole DHCP envoyé en réponse à un message DISCOVER émis par ledit point d'accès réseau à un serveur DHCP du réseau de communication,
- réception en provenance dudit équipement d'une requête d'une information de localisation,
- envoi audit équipement de ladite information de localisation certifiée obtenue. Le procédé selon l'invention permet de fournir à un équipement connecté sur un réseau local d'un point d'accès une information de localisation certifiée par l'opérateur du réseau de communication. Ainsi, une telle information de localisation est fiable et peut être utilisée notamment lors de l'émission d'appels d'urgences. En outre l'invention permet de transmettre l'information de localisation selon un message standardisé compréhensible par tous les points d'accès réseau.

Le point d'accès réseau peut être une passerelle domestique adaptée pour établir un réseau local, par exemple un réseau WIFI, auquel des équipements d'un utilisateur peuvent se connecter. Le point d'accès réseau peut aussi être un HotSpot WIFI public d'un opérateur du réseau de communication. Selon encore une autre variante, le point d'accès réseau peut être un terminal mobile adapté pour fonctionner en modem routeur.

Les différents modes ou caractéristiques de réalisation mentionnés ci-après peuvent être ajoutés indépendamment ou en combinaison les uns avec les autres, aux étapes du procédé de fourniture défini ci-dessus.

Selon un mode particulier de réalisation, l'information de localisation est un code géographique standardisé. Ce mode particulier de réalisation de l'invention permet de fournir audit équipement une information de localisation précise. De plus, un tel code standardisé peut ainsi être compris de manière simple par un fournisseur de service proposant un service géo-localisé via ledit équipement. Selon un autre mode particulier de réalisation de l'invention, l'obtention de ladite information de localisation est mise en œuvre lors d'une phase d'attachement dudit point d'accès réseau au réseau de communication. Ce mode particulier de réalisation de l'invention permet d'obtenir l'information de localisation certifiée du point d'accès réseau dès que le point d'accès réseau se connecte au réseau de communication.

Selon un autre mode particulier de réalisation de l'invention, l'obtention de ladite information de localisation est mise en œuvre lors d'une phase de configuration dudit point d'accès réseau, après l'attachement du point d'accès réseau au réseau de communication. Dans ce mode particulier de réalisation de l'invention, l'information de localisation est obtenue par le point d'accès réseau en même temps que les paramètres de configuration du point d'accès réseau, limitant le nombre de messages échangés pour obtenir cette information.

Selon un autre mode particulier de réalisation de l'invention, l'information de localisation certifiée est obtenue à partir d'une réponse à une requête émise par le point d'accès réseau selon le protocole http. Ce mode particulier de réalisation de l'invention permet de transmettre l'information de localisation selon un message standardisé compréhensible par tous les points d'accès réseau.

Selon un autre mode particulier de réalisation de l'invention, le procédé de fourniture comprend au préalable une étape d'envoi d'une requête de localisation à un serveur du réseau de communication comprenant une adresse IP (pour Internet Protocol en anglais) du point d'accès réseau obtenue par ledit point d'accès réseau lors d'une phase d'attachement au réseau de communication. Ce mode particulier de réalisation de l'invention permet de n'obtenir l'information de localisation certifiée que lorsque cela est nécessaire. A partir de l'adresse IP du point d'accès réseau, le serveur du réseau de communication géré par l'opérateur du réseau de communication vérifie que le point d'accès réseau est bien un point d'accès réseau géré par l'opérateur, et obtient la localisation du point d'accès réseau à partir d'une base de données de l'opérateur.

Selon un autre mode particulier de réalisation de l'invention, le procédé de fourniture comprend au préalable une étape d'envoi d'une requête de localisation à un serveur du réseau de communication comprenant un identifiant IMSI (International Mobile Subscriber Identity en anglais) du point d'accès réseau, lorsque le point d'accès réseau est équipé d'une carte SIM (Subscriber Identity Module en anglais). Ce mode particulier de réalisation de l'invention est avantageux dans le cas où le point d'accès réseau est mobile.

Selon un autre mode particulier de réalisation de l'invention, ladite requête émise par ledit équipement est un message DISCOVER selon le protocole DHCP comprenant dans un champ OPTION une indication relative à une demande de ladite information de localisation. Ladite information de localisation certifiée audit équipement est envoyée dans un message de réponse OFFER selon le protocole DHCP en réponse à ladite requête émise par ledit équipement. Ce mode particulier de réalisation de l'invention procure l'avantage pour transmettre l'information de localisation d'utiliser un standard implémenté sur la plupart des équipements adaptés pour se connecter à un réseau local.

Selon un autre mode particulier de réalisation de l'invention, lorsque le point d'accès réseau est un point d'accès réseau mobile, le message de réponse OFFER envoyé audit équipement comprend une valeur de bail prédéterminée inférieure à une valeur de bail comprise dans un message de réponse OFFER selon le protocole DHCP émis par le point d'accès réseau en réponse à un message DHCP DISCOVER reçu par le point d'accès réseau et ne comprenant pas d'indication relative à une demande d'information de localisation. Ce mode particulier de réalisation de l'invention permet d'adapter la durée du bail DHCP de l'équipement auprès du point d'accès réseau selon que l'équipement demande une information de localisation ou non dans son message DHCP DISCOVER. Lorsque l'équipement demande une information de localisation, la valeur du bail est plus courte, par exemple le bail doit être renouvelé tous les ¼ heures ou toutes les ½ heures. Alors que dans le cas où aucune information de localisation n'est demandée, le bail est renouvelé classiquement toutes les 24 heures.

Ainsi, lorsque le point d'accès réseau est mobile, l'équipement dispose d'une information de localisation fiable car elle est mise à jour fréquemment, à chaque renouvellement de bail DHCP.

Corrélativement, l'invention concerne également un dispositif de fourniture d'une information de localisation adapté pour mettre en œuvre le procédé de fourniture décrit ci-dessus selon l'un quelconque des modes particuliers de réalisation de l'invention.

Selon un mode particulier de réalisation de l'invention, un tel dispositif est compris dans une passerelle domestique.

Selon un autre mode particulier de réalisation de l'invention, un tel dispositif est compris dans un terminal.

L'invention concerne aussi un procédé d'obtention d'une information de localisation mis en œuvre par un équipement apte à être connecté à un point d'accès réseau via un réseau local dudit point d'accès réseau. Ledit équipement étant apte à accéder à un réseau de communication lorsqu'il est connecté audit point d'accès réseau. Le procédé d'obtention comprend les étapes suivantes:
- envoi audit point d'accès réseau d'une requête d'une information de localisation,
- réception en provenance dudit point d'accès réseau de ladite information de localisation, ladite information de localisation étant une information de localisation certifiée par un opérateur du réseau de communication obtenue par ledit point d'accès réseau d'un serveur DHCP du réseau de communication à partir d'un message OFFER selon le protocole DHCP envoyé par le serveur DHCP en réponse à un message DISCOVER émis par ledit point d'accès réseau au serveur DHCP.

Le procédé d'obtention d'une information de localisation selon l'invention permet ainsi à un équipement, par exemple un objet connecté, d'obtenir une information de localisation fiable et précise. L'équipement peut alors traiter l'information de localisation certifiée et fournir à un utilisateur un service géo-localisé pertinent. Contrairement à l'art antérieur, selon l'invention, l'information de localisation est directement fournie par l'opérateur du réseau de communication. Ainsi, l'utilisateur et le fournisseur de service sont assurés d'avoir une information de localisation fiable et précise, et cela sans nécessité de configuration manuelle par l'utilisateur.

Les différents modes ou caractéristiques de réalisation mentionnés ci-après peuvent être ajoutés indépendamment ou en combinaison les uns avec les autres, aux étapes du procédé d'obtention défini ci-dessus.

Selon un mode particulier de réalisation de l'invention, la requête d'une information de localisation est comprise dans un champ « OPTION » d'un message selon le protocole DHCP envoyé par un client DHCP dudit équipement à un serveur DHCP du point d'accès réseau. Ce mode particulier de réalisation de l'invention procure l'avantage que le mécanisme DHCP du serveur DHCP mis en œuvre par le point d'accès réseau n'est pas impacté dans le cas où un tel serveur DHCP ne supporte pas cette option. De plus, la mise en œuvre de l'invention est facilitée car la plupart des équipements mettent en œuvre le protocole DHCP. Corrélativement, l'invention concerne aussi un dispositif d'obtention d'une information de localisation adapté pour mettre en œuvre les étapes du procédé d'obtention défini ci-dessus selon l'un quelconque des modes particuliers de réalisation de l'invention.

Dans un mode non revendiqué, l'invention concerne également un serveur du réseau de communication adapté pour transmettre une information de localisation à un point d'accès réseau apte à établir un réseau local auquel un équipement est susceptible de se connecter pour accéder au réseau de communication, l'information de localisation étant certifiée par l'opérateur du réseau de communication. Le serveur du réseau de communication est également apte à communiquer avec une base de données BDE pour obtenir l'information de localisation certifiée.

Dans un mode particulier de réalisation de l'invention, les différentes étapes du procédé de fourniture d'une information de localisation et du procédé d'obtention d'une information de localisation sont mises en œuvre par des instructions de programmes d'ordinateurs.

En conséquence, l'invention vise aussi des programmes d'ordinateur sur un support d'informations, ces programmes étant susceptibles d'être mis en œuvre respectivement dans un terminal ou plus généralement dans un ordinateur, ces programmes comportant respectivement des instructions adaptées à la mise en œuvre des différentes étapes du procédé de fourniture d'une information de localisation ou du procédé d'obtention d'une information de localisation qui viennent d'être décrits.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique ou électronique, par exemple une clé USB ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution des procédés en question.

### Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels:
- la figure 1 présente un environnement de mise en œuvre de l'invention selon un mode particulier de réalisation de l'invention,
- la figure 2 présente des étapes du procédé de fourniture d'une information de localisation et des étapes du procédé d'obtention d'une information de localisation selon un mode particulier de réalisation de l'invention,
- la figure 3 illustre schématiquement un dispositif adapté à la mise en œuvre des étapes du procédé de fourniture d'une information de localisation selon un mode particulier de réalisation de l'invention,
- la figure 4 illustre schématiquement un dispositif adapté à la mise en œuvre des étapes du procédé d'obtention d'une information de localisation selon un mode particulier de réalisation de l'invention,
- la figure 5 illustre schématiquement un serveur adapté à fournir à un point d'accès réseau une information de localisation selon un mode particulier de réalisation de l'invention.

### Description d'un mode particulier de réalisation de l'invention

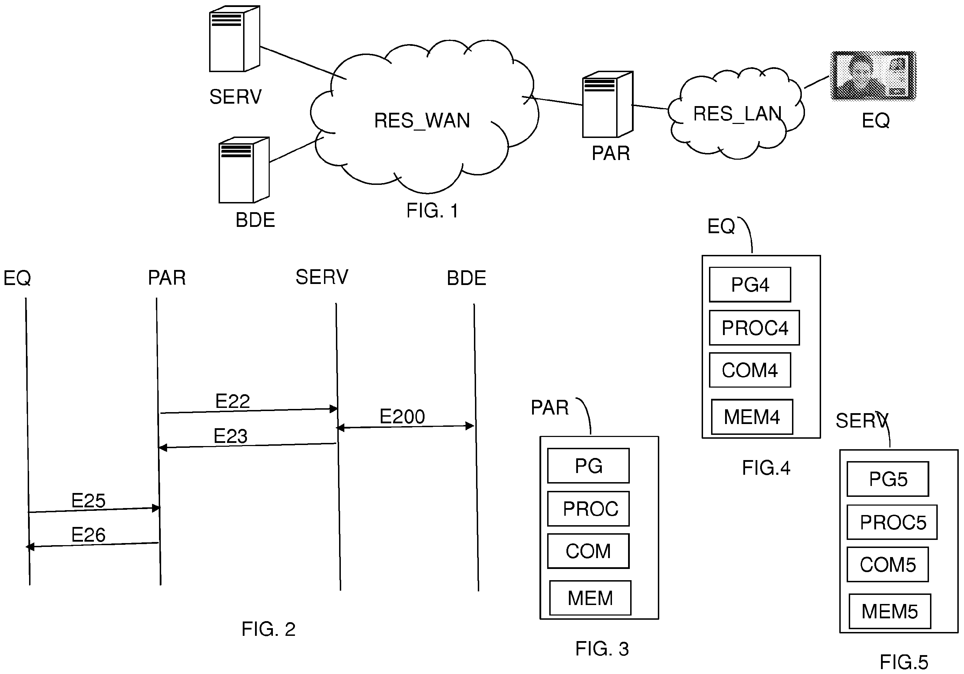

La figure 1 présente un environnement de mise en œuvre de l'invention selon un mode particulier de réalisation de l'invention. La figure 1 comprend un réseau de communication RES_WAN. Le réseau de communication RES_WAN est un réseau d'accès et de collecte d'un opérateur de télécommunication, connecté par exemple à un sous-système IMS (pour IP Multimedia Subsystem) de l'opérateur. Le réseau de communication RES_WAN est par exemple un réseau mobile de communication mobile tel qu'un réseau de communication cellulaire 2G/3G ou 4G ou un réseau de communication fixe, tel qu'un réseau RTC (pour Réseau Téléphonique Commuté).

Un point d'accès réseau PAR est connecté au réseau RES_WAN. Un tel point d'accès est adapté à établir un réseau local RES_LAN auquel des équipements peuvent se connecter pour accéder au réseau de communication RES_WAN. Le réseau RES_LAN est par exemple un réseau local WIFI ou un réseau local Ethernet filaire.

Le point d'accès réseau PAR est par exemple une passerelle résidentielle d'un utilisateur fournie par l'opérateur du réseau de communication lorsque l'utilisateur est abonné auprès d'un tel opérateur.

Selon un autre mode particulier de réalisation de l'invention, le point d'accès réseau PAR est un terminal mobile fonctionnant en modem routeur. Dans ce mode de réalisation de l'invention, le terminal mobile peut être connecté au réseau RES_WAN via une cellule radio (eNobeB ou station de base BTS selon la technologie du réseau d'accès mise en œuvre par le réseau RES_WAN) lorsque le réseau de communication RES_WAN est un réseau de communication mobile. Selon encore un autre mode particulier de réalisation de l'invention, le point d'accès réseau est un routeur WIFI communément appelé HotSpot Wifi, localisé par exemple dans un lieu public.

La figure 1 comprend également un équipement EQ adapté pour se connecter au réseau local RES_LAN du point d'accès réseau PAR. Un tel équipement peut être un terminal mobile, une tablette, une montre connectée, un boîtier domestique d'un système de surveillance à domicile, etc... L'équipement EQ peut être tout objet connecté adapté pour communiquer via un réseau de communication. De façon classique, l'équipement EQ accède au réseau de communication RES_WAN par l'intermédiaire du point d'accès réseau PAR.

Un serveur SERV géré par l'opérateur du réseau RES_WAN est connecté au réseau RES_WAN. Le serveur SERV est par exemple un serveur d'un sous-système EPC (Evolved Packet Core) de l'opérateur du réseau de communication RES_WAN lorsque le réseau de communication RES_WAN est un réseau mobile. Lorsque le réseau de communication RES_WAN est un réseau fixe, le serveur SERV est par exemple un serveur du sous-système IMS de l'opérateur du réseau de communication RES_WAN.

Le serveur SERV permet au point d'accès réseau PAR de s'attacher au réseau de communication RES_WAN et de se configurer pour offrir un accès au réseau de communication RES_WAN aux équipements connectés au réseau local RES_LAN du point d'accès réseau PAR.

La figure 1 comprend également une base de données BDE gérée par l'opérateur du réseau de communication RES_WAN. Une telle base de données BDE mémorise pour chaque accès (utilisateurs, ou points d'accès réseau public) notamment la localisation du point d'accès réseau PAR. Une telle localisation est identifiée de manière précise par exemple par l'adresse, la ville, le code postal. Lorsque le point d'accès réseau est une passerelle résidentielle, la base de données BDE peut mémoriser également le nom de l'abonné, le numéro de téléphone affecté à l'abonné, etc...

Selon un mode particulier de réalisation de l'invention, la localisation du point d'accès réseau est mémorisée sous la forme d'un code géographique standardisé, par exemple un code commune INSEE, ou un code postal, ou des coordonnées GPS.

Lorsque le point d'accès réseau PAR est une passerelle résidentielle d'un utilisateur, ou un terminal mobile fonctionnant en modem routeur, la base de données BDE est par exemple un serveur HSS d'un sous-système IMS ou EPC, mémorisant les données relatives aux utilisateurs abonnés auprès de l'opérateur.

La figure 2 présente des étapes du procédé de fourniture d'une information de localisation et des étapes du procédé d'obtention d'une information de localisation selon un mode particulier de réalisation de l'invention.

Selon le mode particulier de réalisation décrit ici, le point d'accès réseau PAR obtient une information de localisation lors de la phase d'attachement du point d'accès réseau au réseau de communication RES_WAN.

Lors d'une étape E22, le point d'accès réseau PAR s'attache de manière connue au réseau de communication RES_WAN. Pour s'attacher au réseau de communication RES_WAN, le point d'accès réseau PAR peut utiliser le protocole DHCP défini par la norme RFC IETF 2132, ou bien le protocole PPP (pour Point to Point Protocol) défini par la norme RFC IETF 1661.

Le mode de réalisation décrit ici est décrit dans le cas où le protocole DHCP est utilisé. D'autres protocoles sont bien sûr possibles.

Suite à l'étape E22, le point d'accès réseau PAR est affectée d'une adresse IP pour communiquer via le réseau de communication RES_WAN. Lors de la procédure d'attachement, le point d'accès réseau obtient également une adresse IP d'un serveur DHCP du réseau de communication pour renouveler le bail DHCP. En effet, l'adresse IP affectée au point d'accès réseau est fournie pour une durée limitée (bail). Le point d'accès réseau PAR doit renouveler un tel bail avec le serveur DHCP qui lui a attribué cette adresse IP dès que la valeur du bail divisée par 2 est atteinte.

Lors de l'étape E22, le point d'accès réseau émet à destination du serveur SERV jouant ici le rôle du serveur DHCP, un message DISCOVER selon le protocole DHCP. Un message DISCOVER de l'art antérieur est illustré par le tableau 1.

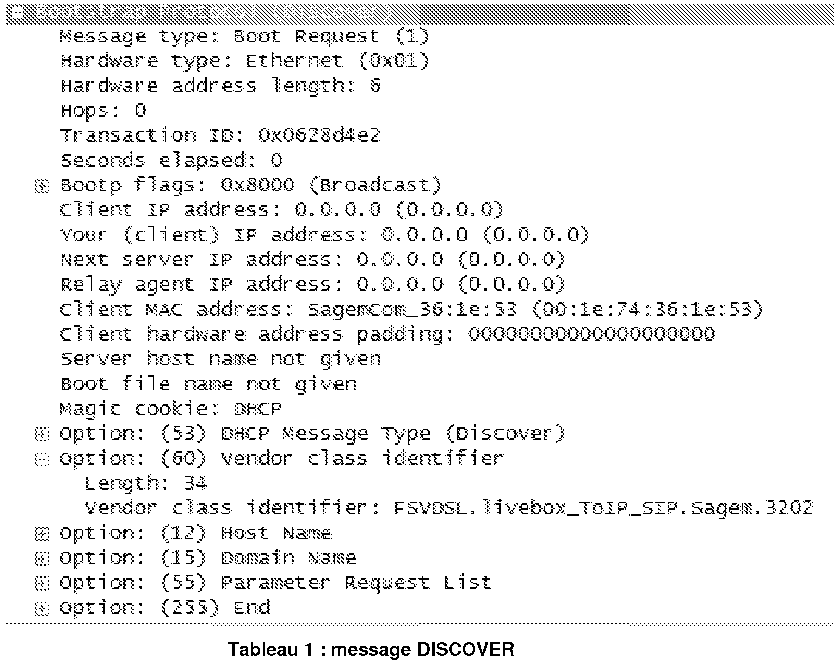

Un tel message DISCOVER comprend notamment un champ « OPTION 55 Parameter Request List». Le champ « OPTION 55 » est associé à une suite de paramètres «Parameter Request List Item (xx)» où « xx » indique un identifiant du type de paramètre demandé dans le message DISCOVER. Une telle suite de paramètres du message DISCOVER du tableau 1 est illustrée par le tableau 2.

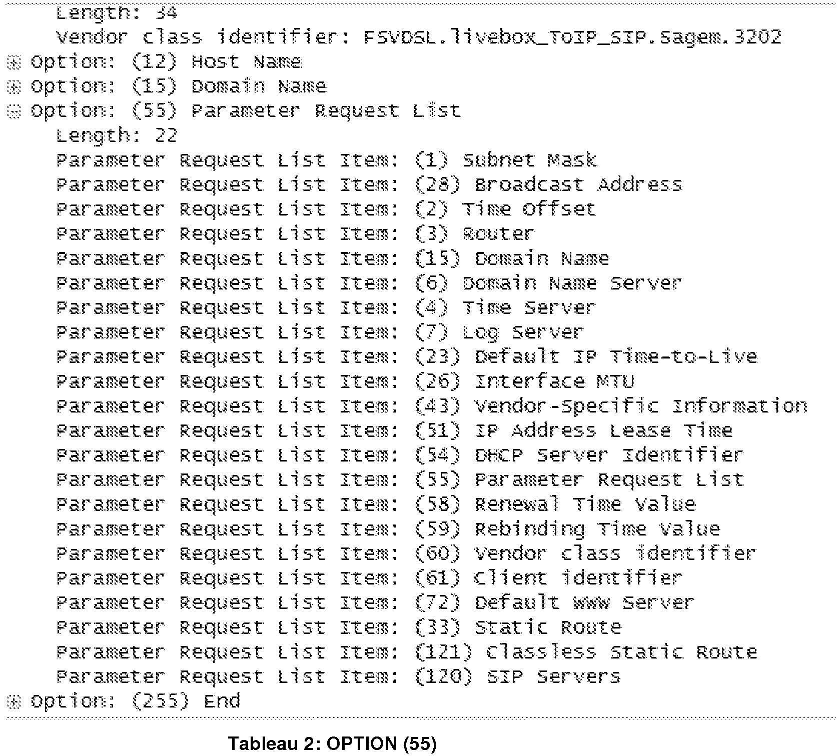

Selon l'invention, un tel message DISCOVER est enrichi d'un nouveau paramètre « Request List Item » intitulé par exemple « localisation ».

Selon une variante du mode particulier de réalisation de l'invention, le nouveau paramètre « localisation » du message DISCOVER est associé à un type de localisation. Par exemple, le type de la localisation est demandé via un code indiquant le type d'information demandée :
- 1 : continent
- 2 : pays,
- 3 : région,
- 4 : département,
- 5 : ville,
- 6 : rue,
- 7 : coordonnées GPS,
- 8 : identifiant de cellule radio,
- 9 : code INSEE,
- 10 : code postal (ZIP code).

D'autres types sont envisageables. Ce mode particulier de réalisation de l'invention permet de spécifier la précision de la localisation demandée.

Au cours de l'étape E22, le serveur SERV reçoit le message DISCOVER émis par le point d'accès réseau PAR.

Lors d'une étape E200, le serveur SERV interroge la base de données BDE afin d'obtenir les informations demandées dans le message DISCOVER et notamment l'information de localisation demandée via le paramètre « localisation » associé au champ « OPTION 55 ».

Par exemple, le serveur SERV interroge la base de données BDE via une requête http. Au cours de l'étape E200, la base de données BDE retourne au serveur SERV notamment l'information de localisation demandée, par exemple sous la forme d'un code commune INSEE.

Au cours de l'étape E200, le serveur SERV reçoit l'information de localisation en provenance de la base de données BDE.

Lors d'une étape E23, le serveur SERV émet à destination du point d'accès réseau PAR une réponse OFFER selon le protocole DHCP au message DISCOVER reçu lors de l'étape E22. Le tableau 3 illustre une réponse OFFER de l'art antérieur enrichie par l'option « localisation » introduite selon un mode particulier de réalisation de l'invention. Selon l'invention, la réponse OFFER émise par le serveur SERV comprend donc un champ « OPTION Localisation » auquel est associée l'information de localisation envoyée par la base de données BDE. La réponse OFFER est reçue par le point d'accès réseau PAR lors de l'étape E23.

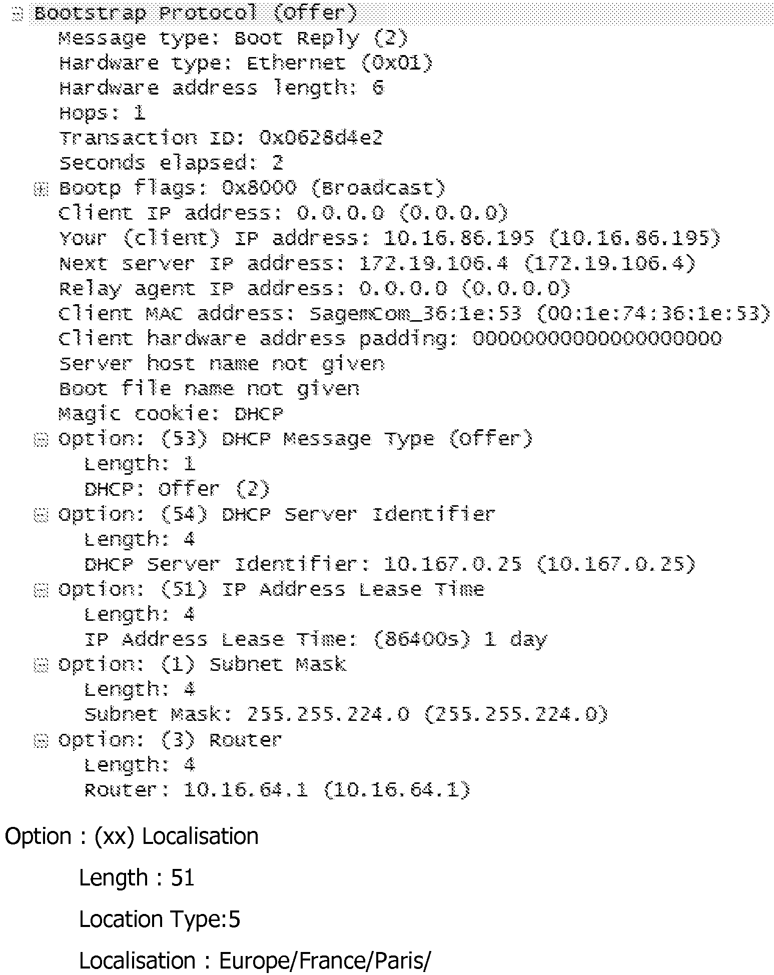

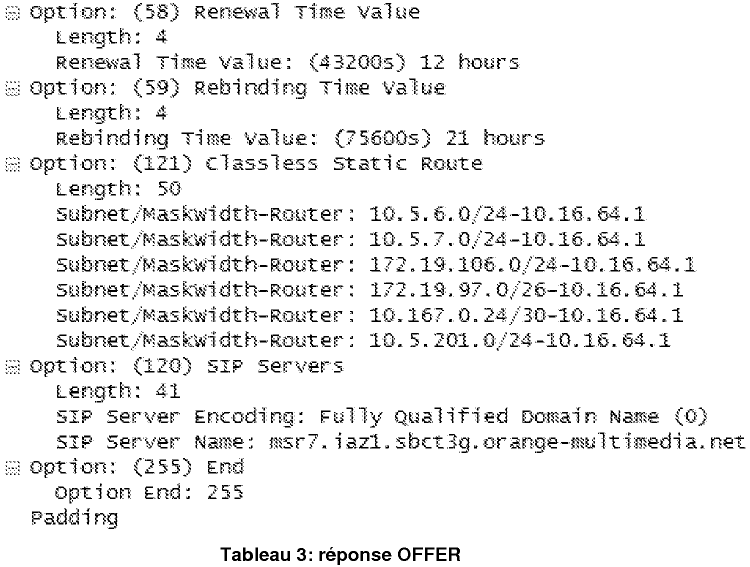

Selon un autre mode particulier de réalisation de l'invention, le point d'accès réseau PAR obtient l'information de localisation lors de la phase de configuration du point d'accès réseau PAR, c'est-à-dire après la phase d'attachement au réseau de communication RES_WAN.

Dans cet autre mode particulier de réalisation, l'étape E22 n'est plus une phase d'attachement du point d'accès réseau PAR au réseau RES_WAN, mais une étape de demande de configuration du point d'accès réseau PAR. Lors de l'étape E22, le point d'accès réseau envoie au serveur SERV qui joue alors le rôle d'un serveur API de configuration, une requête http.

Une exemple de requête http est illustrée ci-dessous par : http :http://op.fr/WT/usrinfo/?serv=SERVLVPA&wt-cvt=4&wt-mco=MCO=OFR&info=lulo,luip,pulo.spr,loc
où lulo,luip,pulo spr, loc sont les informations demandées dans la requête http.

La requête http comprend une indication des informations souhaitées par le point d'accès réseau PAR pour se configurer et notamment l'information « loc » de localisation du point d'accès réseau PAR. Dans la requête http, le point d'accès réseau PAR peut également demander des informations relatives au type d'offre de service VoIP de l'abonné lorsque le point d'accès réseau PAR est une passerelle résidentielle, le numéro de la ligne, le fuseau horaire associé à la ligne VoIP, etc...

Le serveur SERV reçoit la requête http lors de l'étape E22. Lors de l'étape E200, le serveur SERV interroge ensuite la base de données BDE, à partir de l'adresse IP du paquet IP comprenant la requête http émise par le point d'accès réseau PAR pour déterminer les informations demandées par le point d'accès réseau PAR.

Lors de l'étape E23, le serveur SERV envoie une réponse http comprenant les informations demandées et notamment l'information de localisation. Par exemple, la réponse est de la forme :

```
 2000K
   <?xml version="1.0" encoding="ISO-8859-1"?>
   <WTResponse xmlns:xsi="http://www.w3.org/2001/XMLSchema-instance"
   xsi:noNamespaceSchemaLocation="wt.xsd">
   <identifiers>
   <ident name="status" value="OK" />
   <ident name=« pulo » value="userprincipal@op.fr" />
   <ident name=« lulo » value=«userprincipal@op.fr, usersecondaire1@op.fr,
   usersecondaire2@op.fr»/>
   <ident name= « luip » value=« Primary, Multibal, Multibal" />
   <ident name=« spr" value=« bitmask web/sip1 web/sip2" />
   <ident name=« loc" value=« Europe/Paris" />
   </identifiers>
   </WTResponse>
```

Selon une variante de ce mode particulier de réalisation de l'invention, le serveur SERV envoie au point d'accès réseau PAR l'information de localisation dans un fichier de configuration lors de la phase de configuration du point d'accès réseau PAR au lieu de l'envoyer dans le message de réponse à la requête http.

Selon encore un autre mode particulier de réalisation de l'invention dans lequel le point d'accès réseau PAR est un point d'accès réseau mobile 4G, par exemple un terminal mobile fonctionnant en modem routeur, le point d'accès réseau PAR obtient l'information de localisation via une requête « Attach Request d'attachement NAS » (Network Access Stratum) avec un serveur MME (Mobility Management Entity) (non représenté) du réseau de communication RES_WAN. Le serveur MME envoie une requête « Create Session Request » vers un serveur S-GW (Serving Gateway) (non représenté) du réseau de communication RES_WAN, qui envoie une telle requête à un serveur P-GW (Packet Data Network Gateway) (non représenté) du réseau de communication RES_WAN. Dans ce mode particulier de réalisation de l'invention, le serveur P-GW joue alors le rôle d'un serveur DHCP du réseau de communication RES_WAN.

Dans cet autre mode particulier de réalisation de l'invention, lors de l'étape E22, le point d'accès réseau PAR émet à destination du serveur SERV dans la requête d'attachement NAS un nouveau paramètre de demande de localisation dans le champ PCO (Parameters Configuration) d'une telle requête pour obtenir sa localisation. La requête d'attachement NAS comprend notamment un identifiant IMSI du point d'accès réseau PAR.

Lors de l'étape E200, le serveur SERV interroge la base de données BDE à partir de l'identifiant IMSI pour obtenir la localisation du point d'accès réseau PAR. La base de données BDE transmet au serveur une telle localisation soit directement sous la forme d'un code standardisé tel qu'un code commune INSEE, soit sous la forme d'un identifiant de cellule radio LAI (Location Area Identifier) en 2G/3G ou TAI (Tracking Area Identifier) en 4G.

Lorsque la base de données BDE transmet au serveur SERV la localisation du point d'accès réseau PAR sous la forme d'un identifiant de cellule radio, le serveur SERV transforme cette localisation en un code standardisé en interrogeant une base de données de l'opérateur (non représentée).

En variante, la requête émise par le point d'accès réseau PAR comprend également un identifiant de cellule radio à laquelle le point d'accès réseau PAR est attaché. Selon cette variante, le serveur SERV vérifie à partir de l'identifiant IMSI de la requête que le point d'accès réseau est bien localisé sur cette cellule radio en interrogeant la base de données BDE et traduit l'identifiant de cellule radio en un code géographique standardisé.

Lors de l'étape E23, le serveur SERV transmet au point d'accès réseau PAR sa localisation sous la forme d'un code géographique standardisé, tel qu'un code commune INSEE, ou autre. Le point d'accès réseau PAR mémorise au cours de l'étape E23 l'information de localisation obtenue.

Tous les modes de réalisation décrits ici permettent au point d'accès réseau PAR d'obtenir une information de localisation certifiée par l'opérateur du réseau de communication RES_WAN. En effet, une telle localisation est fournie par un serveur SERV du réseau RES_WAN et obtenue auprès d'une base de données BDE gérée par l'opérateur du réseau RES_WAN à partir d'un identifiant (IMSI, adresse IP) affectée au point d'accès réseau PAR par une entité de l'opérateur du réseau RES_WAN. La localisation obtenue est donc fiable.

Lorsque le point d'accès réseau PAR dispose d'une information de localisation certifiée, il peut ensuite la distribuer aux équipements connectés à son réseau local RES_LAN.

Lors d'une étape E25, l'équipement EQ s'attache au réseau local RES_LAN établi par le point d'accès réseau PAR. Afin de fournir une connectivité au réseau RES_LAN à l'équipement EQ, le point d'accès réseau dispose d'un serveur DHCP adapté pour fournir à l'équipement EQ notamment une adresse IP sur le réseau RES_LAN. De même, l'équipement EQ dispose d'un client DHCP adapté pour communiquer avec un serveur DHCP.

Lors de l'étape E25, l'équipement EQ envoie au serveur DHCP du point d'accès réseau PAR un message DISCOVER comprenant le paramètre « localisation » dans un champ « OPTION 55 » selon l'invention. Lors de l'étape E25, le point d'accès réseau PAR reçoit un tel message qui constitue une requête d'une information de localisation.

Lors d'une étape E26, le point d'accès réseau PAR envoie à l'équipement EQ l'information de localisation obtenue lors de l'étape E23, dans un champ « OPTION » associé au paramètre « localisation » d'un message OFFER selon le protocole DHCP selon l'invention.

Les messages DISCOVER et OFFER échangés lors des étapes E25 et E26 sont enrichis du paramètre « localisation » tel que décrit plus haut en relation avec les étapes E22 et E23.

Lors de l'étape E26, le point d'accès réseau fournit également dans le message OFFER d'autres informations permettant à l'équipement EQ d'établir une connexion avec le réseau local RES_LAN, et notamment une adresse IP. Suite à l'étape E26, l'équipement EQ accède au réseau de communication RES_WAN par l'intermédiaire du point d'accès réseau PAR.

Suite à l'étape E26, l'équipement EQ peut traiter l'information de localisation reçue lors de l'étape E26, par exemple en fournissant cette information à une application fournissant un service géo-localisé ou en mémorisant cette information dans une mémoire accessible pour une couche applicative d'un service de VoWIFI, etc....

Selon la forme sous laquelle l'information de localisation est stockée par la base de données BDE, une étape de transformation (non représentée) peut être nécessaire pour traduire l'information de localisation en un code géographique standardisé compréhensible par le service mis en œuvre par l'équipement EQ. Une telle traduction peut être mise en œuvre par le serveur SERV avant l'envoi de l'information de localisation au point d'accès réseau PAR, par le point d'accès réseau PAR ou encore par l'équipement EQ lorsque l'équipement EQ a reçu cette information de localisation du point d'accès réseau PAR. Par exemple, lorsque l'information de localisation est sous la forme des coordonnées GPS ou d'un identifiant de cellule radio, elle peut être traduire en un code INSEE, ou un code postal (ou ZIP code). Une telle traduction peut être faite à partir d'une base de données de l'opérateur stockant par exemple une correspondance entre les identifiants de cellule radio et les codes communes INSEE ou bien stockant des correspondances entre les codes INSEE ou codes postaux et leur localisation par coordonnées GPS.

Selon un mode particulier de réalisation de l'invention, lorsque le point d'accès réseau PAR est un point d'accès réseau mobile, par exemple un terminal mobile, le message de réponse OFFER envoyé à l'équipement EQ lors de l'étape E26 comprend une valeur de renouvellement de bail prédéterminée, par exemple ½ heures. Une telle valeur de renouvellement de bail est inférieure à la valeur de renouvellement de bail classique qui est comprise dans un message de réponse OFFER émis en réponse à un message DISCOVER ne comprenant pas d'indication relative à une demande d'information de localisation. Par exemple, lorsque l'équipement EQ ne demande pas d'information de localisation, la valeur du bail est de 24 heures. Dans ce cas, l'équipement EQ renouvelle son bail auprès du point d'accès réseau PAR pour maintenir son adresse IP toutes les 12 heures (valeur du bail divisée par 2). Or, lorsque le point d'accès réseau PAR est mobile, la localisation du point d'accès réseau PAR peut avoir changée au cours des 12 heures après l'attachement initial de l'équipement EQ. Par exemple, le point d'accès réseau mobile PAR peut changer de cellule 2G/3G ou 4G. La localisation fournie initialement à l'équipement EQ lors de son attachement au réseau RES_WAN n'est donc pas forcément valide pendant toute la durée d'attachement de l'équipement.

Le mode particulier de réalisation décrit ici permet donc d'adapter la valeur de renouvellement du bail auprès du point d'accès réseau PAR selon qu'une information de localisation est demandée ou non par l'équipement EQ.

Selon ce mode particulier de réalisation de l'invention, le serveur DHCP du point d'accès réseau PAR attribue une valeur de bail plus courte à l'équipement EQ s'il demande une information de localisation dans sa requête d'attachement initiale DISCOVER. Par exemple, la durée de bail fournie est fixée à 30 minutes. L'équipement EQ renouvelle alors son bail tous les ¼ d'heures.

En variante, l'équipement EQ peut demander différents niveaux de précisions d'options de localisation auxquels sont associés différentes valeurs de bail.

Par exemple :
- Option xx1 : localisation → pas de contrainte
- Option xx2 : localisation-TTL-24H → précision de durée de vie de localisation à 24H
- Option xx3 : localisation-TTL-12H → précision de durée de vie de localisation à 12H
- Option xx4 : localisation-TTL-1H → précision de durée de vie de localisation à 1H

La valeur de bail émise par le point d'accès réseau PAR est ainsi adaptée en fonction de la précision la durée de vie de la localisation. En retour, le serveur DHCP fixe une valeur de bail en fonction de l'option demandée. Par exemple, pour l'Option xx4, la durée de vie de la localisation est de 1 heure, le serveur DHCP fixe donc le bail à 1heure et le renouvellement du bail doit être fait toutes les ½ heures. Selon un autre exemple, pour l'option Option xx3, la durée de vie de la localisation est de 12 heures, le serveur DHCP fixe le bail à 12 heures et celui-ci sera renouvelé toutes les 6 heures. Cette variante de réalisation permet de définir une durée de bail en fonction de l'utilisation de l'information de localisation faite par l'équipement EQ. Par exemple, pour un service géo-localisé fourni par une station météo connectée, une durée de vie de 12 heures est suffisante. Selon un autre exemple, pour un service de voix sur WIFI (VoWIFI) fourni par une tablette ou un smartphone, une durée de vie de 1 heure est nécessaire afin d'avoir une localisation toujours à jour en cas d'appels d'urgences à émettre.

La figure 3 illustre schématiquement un dispositif PAR adapté à la mise en œuvre des étapes du procédé de fourniture d'une information de localisation selon un mode particulier de réalisation de l'invention.

Le dispositif PAR a l'architecture classique d'un ordinateur. Le dispositif PAR comprend un module de stockage MEM, par exemple une mémoire, un module de traitement PROC, équipé par exemple d'un microprocesseur, et piloté par un programme d'ordinateur PG.

A l'initialisation, les instructions de code du programme d'ordinateur PG sont par exemple chargées en mémoire MEM avant d'être exécutées par le processeur du module de traitement PROC.

Selon les instructions du programme d'ordinateur PG, le processeur du module de traitement PROC met en œuvre les étapes du procédé de fourniture d'une information de localisation à un équipement connecté à un réseau local RES_LAN dudit dispositif PAR, ledit dispositif PAR étant adapté pour donner audit équipement un accès à un réseau de communication RES_WAN auquel ledit dispositif PAR est connecté. Le processeur du module de traitement PROC met notamment en œuvre les étapes d'obtention en provenance d'un serveur du réseau de communication RES_WAN d'une information de localisation dudit dispositif PAR, ladite information de localisation étant une information de localisation certifiée par l'opérateur du réseau de communication, de réception en provenance dudit équipement d'une requête d'une information de localisation, et d'envoi audit équipement de ladite information de localisation certifiée obtenue. Le module de stockage MEM permet notamment au dispositif PAR de stocker ladite information de localisation certifiée.

Le dispositif PAR comprend aussi un module de communication COM adapté pour communiquer avec d'autres équipements via notamment le réseau de communication RES_WAN et le réseau de communication local RES_LAN décrit en relation avec la figure 1. Le module de communication COM coopère avec le module de traitement PROC pour permettre notamment au dispositif PAR d'obtenir une information de localisation, de recevoir une requête d'une information de localisation en provenance d'un équipement, et d'envoyer l'information de localisation audit équipement.

Le dispositif PAR est par exemple un point d'accès réseau tel qu'une passerelle résidentielle ou professionnelle ou un routeur WIFI.

Selon un autre mode particulier de réalisation, le dispositif PAR est un terminal, par exemple un terminal mobile, fonctionnant en modem routeur.

La figure 4 illustre schématiquement un dispositif EQ adapté à la mise en œuvre des étapes du procédé d'obtention d'une information de localisation selon un mode particulier de réalisation de l'invention.

Le dispositif EQ comprend un module de stockage MEM4, par exemple une mémoire, un module de traitement PROC4, équipé par exemple d'un microprocesseur, et piloté par un programme d'ordinateur PG4.

A l'initialisation, les instructions de code du programme d'ordinateur PG4 sont par exemple chargées en mémoire MEM4 avant d'être exécutées par le processeur du module de traitement PROC4.

Selon les instructions du programme d'ordinateur PG4, le processeur du module de traitement PROC4 met en œuvre les étapes du procédé d'obtention d'une information de localisation tel que décrit en relation avec la figure 2. Lorsque ledit équipement EQ est connecté à un point d'accès réseau PAR via un réseau local RES_LAN dudit point d'accès réseau PAR, ledit équipement EQ est apte à accéder à un réseau de communication RES_WAN via ledit point d'accès réseau PAR. Selon les instructions du programme d'ordinateur PG4, le processeur du module de traitement PROC4 met notamment en œuvre les étapes d'envoi audit point d'accès réseau PAR d'une requête d'une information de localisation, de réception en provenance dudit point d'accès réseau PAR de ladite information de localisation, ladite information de localisation étant une information de localisation certifiée par un opérateur du réseau de communication RES_WAN.

Le module de stockage MEM4 permet notamment au dispositif EQ de stocker ladite information de localisation reçue de sorte à la fournir à une application fournissant un service géo-localisé.

Le dispositif EQ comprend aussi un module de communication COM4 adapté pour communiquer avec d'autres équipements via notamment le réseau de communication RES_WAN et le réseau de communication local RES_LAN décrit en relation avec la figure 1. Le module de communication COM4 coopère avec le module de traitement PROC4 pour permettre notamment au dispositif EQ d'envoyer audit point d'accès réseau PAR une requête d'une information de localisation, et de recevoir en provenance dudit point d'accès réseau PAR ladite information de localisation.

Le dispositif EQ est par exemple un terminal fixe ou mobile, un smartphone, une tablette, une télévision connectée, un ordinateur personnel, une montre connectée, ou tout autre objet connecté apte à communiquer via un réseau de communication et à fournir un service géo-localisé.

La figure 5 illustre schématiquement un serveur SERV adapté à fournir à un point d'accès réseau PAR une information de localisation selon un mode particulier de réalisation de l'invention.

Le serveur SERV a l'architecture classique d'un ordinateur. Le serveur SERV comprend un module de stockage MEM5, par exemple une mémoire, un module de traitement PROC5, équipé par exemple d'un microprocesseur, et piloté par un programme d'ordinateur PG5.

A l'initialisation, les instructions de code du programme d'ordinateur PG5 sont par exemple chargées en mémoire MEM5 avant d'être exécutées par le processeur du module de traitement PROC5.

Selon les instructions du programme d'ordinateur PG5, le processeur du module de traitement PROC5 met en œuvre les étapes du procédé de fourniture d'une information de localisation décrites en relation avec la figure 2. Le processeur du module de traitement PROC5 met notamment en œuvre les étapes de réception en provenance du point d'accès réseau PAR d'une requête d'information de localisation (étape E22), d'interrogation de la base de données BDE pour obtenir une information de localisation du point d'accès réseau PAR et de réception en provenance de la base de données d'une telle information (étape E200), de transmission audit point d'accès réseau PAR de ladite information de localisation certifiée par l'opérateur du réseau de communication RES_WAN (étape E23).

Le module de stockage MEM5 permet notamment au serveur SERV de stocker ladite information de localisation certifiée.

Le serveur SERV comprend aussi un module de communication COM5 adapté pour communiquer avec d'autres équipements via notamment le réseau de communication RES_WAN décrit en relation avec la figure 1. Le module de communication COM5 coopère avec le module de traitement PROC5 pour permettre notamment au serveur SERV de communiquer avec la base de données BDE et le point d'accès réseau PAR.

Selon un mode particulier de réalisation de l'invention, le serveur SERV comprend un serveur DHCP adapté à fournir l'information de localisation certifiée au point d'accès réseau PAR dans un message DHCP OFFER tel que décrit dans le tableau 3 ci-dessus.

## Revendications

1. Procédé de fourniture d'une information de localisation à un équipement (EQ), mis en œuvre par un point d'accès réseau (PAR), ledit point d'accès réseau (PAR) étant adapté pour donner audit équipement (EQ) un accès à un réseau de communication auquel le point d'accès (PAR) est connecté lorsque ledit équipement (EQ) est connecté à un réseau de communication local dudit point d'accès réseau (PAR), le procédé comprenant les étapes suivantes:
- obtention (E23) en provenance d'un serveur (SERV) du réseau de communication d'une information de localisation dudit point d'accès réseau (PAR), ladite information de localisation étant une information de localisation certifiée par l'opérateur du réseau de communication, l'information de localisation étant obtenue à partir d'un message OFFER selon le protocole DHCP envoyé en réponse à un message DISCOVER émis (E22) par ledit point d'accès réseau à un serveur DHCP du réseau de communication,
- réception (E25) en provenance dudit équipement (EQ) d'une requête d'une information de localisation,
- envoi (E26) audit équipement (EQ) de ladite information de localisation certifiée obtenue.

2. Procédé de fourniture d'une information de localisation selon la revendication 1, dans lequel l'information de localisation est un code géographique standardisé.

3. Procédé de fourniture d'une information de localisation selon la revendication 1, dans lequel l'obtention de ladite information de localisation est mise en œuvre lors d'une phase d'attachement dudit point d'accès réseau au réseau de communication.

4. Procédé de fourniture d'une information de localisation selon la revendication 1, dans lequel l'obtention de ladite information de localisation est mise en œuvre lors d'une phase de configuration dudit point d'accès réseau, après l'attachement du point d'accès réseau au réseau de communication.

5. Procédé de fourniture d'une information de localisation selon la revendication 4, dans lequel, en outre, l'information de localisation certifiée est obtenue à partir d'une réponse à une requête émise par le point d'accès réseau selon le protocole http.

6. Procédé de fourniture d'une information de localisation selon la revendication 1, comprenant au préalable une étape d'envoi d'une requête de localisation à un serveur du réseau de communication comprenant un identifiant IMSI du point d'accès réseau, lorsque le point d'accès réseau est équipé d'une carte SIM.

7. Procédé de fourniture d'une information de localisation selon la revendication 1, dans lequel :
- ladite requête émise (E25) par ledit équipement est un message DISCOVER selon le protocole DHCP comprenant dans un champ OPTION une indication relative à une demande de ladite information de localisation,
- ladite information de localisation certifiée audit équipement est envoyée (E26) dans un message de réponse OFFER selon le protocole DHCP en réponse à ladite requête émise par ledit équipement.

8. Procédé de fourniture d'une information de localisation selon la revendication 7, dans lequel, lorsque le point d'accès réseau est un point d'accès réseau mobile, le message de réponse OFFER envoyé audit équipement comprend une valeur de bail prédéterminée inférieure à une valeur de bail comprise dans un message de réponse OFFER selon le protocole DHCP émis en réponse à un message DHCP DISCOVER ne comprenant pas d'indication relative à une demande d'information de localisation.

9. Dispositif de fourniture d'une information de localisation à un équipement apte à être connecté à un réseau local dudit dispositif, ledit dispositif étant un point d'accès réseau (PAR) adapté pour donner audit équipement un accès à un réseau de communication auquel ledit dispositif est connecté lorsque ledit équipement est connecté audit réseau local, le dispositif comprenant :
- un module de communication (COM) adapté pour obtenir en provenance d'un serveur du réseau de communication une information de localisation dudit dispositif, ladite information de localisation étant une information de localisation certifiée par l'opérateur du réseau de communication, ladite information de localisation étant obtenue (E23) à partir d'un message OFFER selon le protocole DHCP envoyé en réponse à un message DISCOVER émis (E22) par ledit point d'accès réseau à un serveur DHCP du réseau de communication
- un module de stockage (MEM) adapté pour mémoriser ladite information de localisation certifiée,
- le module de communication (COM) étant configuré pour (E26) envoyer audit équipement ladite information de localisation certifiée suite à la réception (E25) en provenance dudit équipement d'une requête d'une information de localisation.

10. Terminal comprenant un dispositif selon la revendication 9.

11. Procédé d'obtention d'une information de localisation mis en œuvre par un équipement (EQ) apte à être connecté à un réseau local d'un point d'accès réseau (PAR), ledit équipement (EQ) étant configuré pour accéder à un réseau de communication via ledit point d'accès réseau (PAR) lorsque ledit équipement est connecté audit réseau local, le procédé comprenant les étapes suivantes:
- envoi (E25) audit point d'accès réseau (PAR) d'une requête d'une information de localisation,
- réception (E26) en provenance dudit point d'accès réseau (PAR) de ladite information de localisation, ladite information de localisation étant une information de localisation certifiée par un opérateur du réseau de communication obtenue par ledit point d'accès réseau d'un serveur DHCP du réseau de communication à partir d'un message OFFER selon le protocole DHCP envoyé (E23) par le serveur DHCP en réponse à un message DISCOVER émis (E22) par ledit point d'accès réseau au serveur DHCP.

12. Procédé d'obtention d'une information de localisation selon la revendication 11, dans lequel :
- la requête d'une information de localisation est comprise dans un champ « OPTION » d'un message selon le protocole DHCP envoyé par un client DHCP dudit équipement à un serveur DHCP du point d'accès réseau.

13. Dispositif d'obtention d'une information de localisation, apte à être connecté à un réseau local d'un point d'accès réseau, ledit dispositif étant configuré pour accéder à un réseau de communication via ledit point d'accès réseau lorsque ledit dispositif est connecté audit réseau local, le dispositif comprenant un module de communication (COM4) configuré pour :
- envoyer (E25) audit point d'accès réseau une requête d'une information de localisation, et
- recevoir (E26) en provenance dudit point d'accès réseau ladite information de localisation, ladite information de localisation étant une information de localisation certifiée par un opérateur du réseau de communication et obtenue par ledit point d'accès réseau d'un serveur DHCP du réseau de communication à partir d'un message OFFER selon le protocole DHCP envoyé (E23) par le serveur DHCP en réponse à un message DISCOVER émis (E22) par ledit point d'accès réseau au serveur DHCP.

14. Programme d'ordinateur comportant des instructions de code de programme pour l'exécution des étapes du procédé de fourniture d'une information de localisation selon l'une quelconque des revendications 1 à 8 ou des étapes du procédé d'obtention d'une information de localisation selon l'une quelconque des revendications 11 ou 12, lorsque le programme est exécuté par un processeur.

## Patentansprüche

1. Verfahren zur Versorgung eines Geräts (EQ) mit einer Positionsinformation, das von einem Netzzugangspunkt (PAR) ausgeführt wird, wobei der Netzzugangspunkt (PAR) geeignet ist, dem Gerät (EQ) Zugang zu einem Kommunikationsnetz, mit dem der Zugangspunkt (PAR) verbunden ist, zu geben, wenn das Gerät (EQ) mit einem lokalen Kommunikationsnetz des Netzzugangspunkts (PAR) verbunden ist, wobei das Verfahren die folgenden Schritte umfasst:
- Erhalten (E23) einer von einem Server (SERV) des Kommunikationsnetzes kommenden Positionsinformation des Netzzugangspunkts (PAR), wobei die Positionsinformation eine vom Kommunikationsnetzbetreiber zertifizierte Positionsinformation ist, wobei die Positionsinformation ausgehend von einer OFFER-Nachricht nach dem DHCP-Protokoll erhalten wird, die als Antwort auf eine DISCOVER-Nachricht erhalten wird, die von dem Netzzugangspunkt an einen DHCP-Server des Kommunikationsnetzes ausgegeben (E22) wird,
- Empfangen (E25) einer von dem Gerät (EQ) kommenden Positionsinformationsanforderung,
- Senden (E26) der erhaltenen zertifizierten Positionsinformation an das Gerät (EQ).

2. Verfahren zur Versorgung mit einer Positionsinformation nach Anspruch 1, bei dem die Positionsinformation ein standardisierter geografischer Code ist.

3. Verfahren zur Versorgung mit einer Positionsinformation nach Anspruch 1, bei dem das Erhalten der Positionsinformation während einer Phase des Einbindens des Netzzugangspunkts in das Kommunikationsnetz ausgeführt wird.

4. Verfahren zur Versorgung mit einer Positionsinformation nach Anspruch 1, bei dem das Erhalten der Positionsinformation während einer Konfigurationsphase des Netzzugangspunkts, nach dem Einbinden des Netzzugangspunkts in das Kommunikationsnetz, ausgeführt wird.

5. Verfahren zur Versorgung mit einer Positionsinformation nach Anspruch 4, bei dem die zertifizierte Positionsinformation ferner ausgehend von einer Antwort auf eine Anforderung erhalten wird, die vom Netzzugangspunkt nach dem http-Protokoll ausgegeben wird.

6. Verfahren zur Versorgung mit einer Positionsinformation nach Anspruch 1, umfassend zuvor einen Schritt des Sendens einer Positionsbestimmungsanforderung an einen Server des Kommunikationsnetzes mit einer IMSI-Kennung des Netzzugangspunkts, wenn der Netzzugangspunkt mit einer SIM-Karte ausgestattet ist.

7. Verfahren zur Versorgung mit einer Positionsinformation nach Anspruch 1, bei dem:
- die vom Gerät gesendete (E25) Anforderung eine DISCOVER-Nachricht nach dem DHCP-Protokoll ist, die in einem OPTION-Feld eine Kennung bezüglich einer Positionsinformationsanfrage umfasst,
- die zertifizierte Positionsinformation an das Gerät in einer OFFER-Antwortnachricht nach dem DHCP-Protokoll als Antwort auf die von dem Gerät ausgegebene Anforderung gesendet (E26) wird.

8. Verfahren zur Versorgung mit einer Positionsinformation nach Anspruch 7, bei dem, wenn der Netzzugangspunkt ein mobiler Netzzugangspunkt ist, die an das Gerät gesendete OFFER-Antwortnachricht einen vorbestimmten Lease-Wert umfasst, der geringer als ein Lease-Wert ist, der in einer OFFER-Antwortnachricht nach dem DHCP-Protokoll enthalten ist, die als Antwort auf eine DHCP-DISCOVER-Nachricht ausgegeben wird, die keine Angabe bezüglich einer Positionsinformationsanfrage enthält.

9. Vorrichtung zur Versorgung eines Geräts, das geeignet ist, mit einem lokalen Netz der Vorrichtung verbunden zu werden, mit einer Positionsinformation, wobei die Vorrichtung ein Netzzugangspunkt (PAR) ist, der geeignet ist, dem Gerät einen Zugang zu dem Kommunikationsnetz zu geben, mit dem die Vorrichtung verbunden ist, wenn das Gerät mit dem lokalen Netz verbunden ist, wobei die Vorrichtung umfasst:
- ein Kommunikationsmodul (COM), das geeignet ist, eine von einem Server des Kommunikationsnetzes kommende Positionsinformation der Vorrichtung zu erhalten, wobei die Positionsinformation eine vom Kommunikationsnetzbetreiber zertifizierte Positionsinformation ist, wobei die Positionsinformation ausgehend von einer OFFER-Nachricht nach dem DHCP-Protokoll erhalten (E23) wird, die als Antwort auf eine DISCOVER-Nachricht gesendet wird, von dem Netzzugangspunkt an einen DHCP-Server des Kommunikationsnetzes ausgegeben (E22) wird,
- ein Speichermodul (MEM), das geeignet ist, die zertifizierte Positionsinformation zu speichern,
- wobei das Kommunikationsmodul (COM) dazu konfiguriert ist, an das Gerät die zertifizierte Positionsinformation nach dem Empfangen (E25) einer von dem Gerät kommenden Positionsinformationsanforderung zu senden (E26).

10. Terminal mit einer Vorrichtung nach Anspruch 9.

11. Verfahren zum Erhalten einer Positionsinformation, das von einem Gerät (EQ) ausgeführt wird, das geeignet ist, mit einem lokalen Netz eines Netzzugangspunkts (PAR) verbunden zu werden, wobei das Gerät (EQ) dazu konfiguriert ist, über den Netzzugangspunkt (PAR) auf ein Kommunikationsnetz zuzugreifen, wenn das Gerät mit dem lokalen Netz verbunden ist, wobei das Verfahren die folgenden Schritte umfasst:
- Senden (E25) einer Positionsinformationsanforderung an den Netzzugangspunkt (PAR),
- Empfangen (E26) der vom Netzzugangspunkt (PAR) kommenden Positionsinformation, wobei die Positionsinformation eine von einem Kommunikationsnetzbetreiber zertifizierte Positionsinformation ist, die von dem Netzzugangspunkt eines DHCP-Servers des Kommunikationsnetzes ausgehend von einer OFFER-Nachricht nach dem DHCP-Protokoll erhalten wird, die vom DHCP-Server als Antwort auf eine DISCOVER-Nachricht gesendet (E23) wird, die vom Netzzugangspunkt an den DHCP-Server ausgegeben (E22) wird.

12. Verfahren zum Erhalten einer Positionsinformation nach Anspruch 11, bei dem:
- die Positionsinformationsanforderung in einem "OPTION"-Feld einer Nachricht nach dem DHCP-Protokoll enthalten ist, die von einem DHCP-Client des Geräts an einen DHCP-Server des Netzzugangspunkts gesendet wird.

13. Vorrichtung zum Erhalten einer Positionsinformation, die geeignet ist, mit einem lokalen Netz eines Netzzugangspunkts verbunden zu werden, wobei die Vorrichtung dazu konfiguriert ist, über den Netzzugangspunkt auf ein Kommunikationsnetz zuzugreifen, wenn die Vorrichtung mit dem lokalen Netz verbunden ist, wobei die Vorrichtung ein Kommunikationsmodul (COM4) umfasst, das dazu konfiguriert ist:
- an den Netzzugangspunkt eine Positionsinformationsanforderung zu senden (E25) und
- die von dem Netzzugangspunkt kommende Positionsinformation zu empfangen (E26), wobei die Positionsinformation eine Positionsinformation ist, die von einem Kommunikationsnetzbetreiber zertifiziert ist und vom Netzzugangspunkt eines DHCP-Servers des Kommunikationsnetzes ausgehend von einer OFFER-Nachricht nach dem DHCP-Protokoll erhalten wird, die vom DHCP-Server als Antwort auf eine DISCOVER-Nachricht gesendet (E23) wird, die vom Netzzugangspunkt an den DHCP-Server ausgegeben (E22) wird.

14. Computerprogramm mit Programmcodeanweisungen zum Ausführen der Schritte des Verfahrens zur Versorgung mit einer Positionsinformation nach einem der Ansprüche 1 bis 8 oder der Schritte des Verfahrens zum Erhalten einer Positionsinformation nach einem der Ansprüche 11 oder 12, wenn das Programm von einem Prozessor ausgeführt wird.

## Claims

1. Method for supplying location information to an equipment item (EQ), implemented by a network access point (PAR), said network access point (PAR) being adapted to give said equipment item (EQ) access to a communication network to which the access point (PAR) is connected when said equipment item (EQ) is connected to a local communication network of said network access point (PAR), the method comprising the following steps:
- obtaining (E23), from a server (SERV) of the communication network, information on the location of said network access point (PAR), said location information being location information certified by the operator of the communication network, the location information being obtained from an OFFER message according to the DHCP protocol sent in response to a DISCOVER message sent (E22) by said network access point to a DHCP server of the communication network,
- receiving (E25), from said equipment item (EQ), a request for location information,
- sending (E26), to said equipment item (EQ), said certified location information obtained.

2. Method for supplying location information according to Claim 1, in which the location information is a standardized geographic code.

3. Method for supplying location information according to Claim 1, in which the obtaining of said location information is implemented in a phase of attachment of said network access point to the communication network.

4. Method for supplying location information according to Claim 1, in which the obtaining of said location information is implemented in a phase of configuration of said network access point, after the attachment of the network access point to the communication network.

5. Method for supplying location information according to Claim 4, in which, furthermore, the certified location information is obtained from a response to a request sent by the network access point according to the http protocol.

6. Method for supplying location information according to Claim 1, comprising, beforehand, a step of sending a location request to a server of the communication network comprising an IMSI identifier of the network access point, when the network access point is equipped with a SIM card.

7. Method for supplying location information according to Claim 1, in which:
- said request sent (E25) by said equipment item is a DISCOVER message according to the DHCP protocol comprising, in an OPTION field, an indication relating to a request for said location information,
- said certified location information to said equipment item is sent (E26) in an OFFER response message according to the DHCP protocol in response to said request sent by said equipment item.

8. Method for supplying location information according to Claim 7, in which, when the network access point is a mobile network access point, the OFFER response message sent to said equipment item comprises a predetermined lease value less than a lease value included in an OFFER response message according to the DHCP protocol sent in response to a DHCP DISCOVER message not comprising an indication relating to a location information request.

9. Device for supplying location information to an equipment item that can be connected to a local area network of said device, said device being a network access point (PAR) adapted to give said equipment item access to a communication network to which said device is connected when said equipment item is connected to said local area network, the device comprising:
- a communication module (COM) adapted to obtain, from a server of the communication network, information on the location of said device, said location information being location information certified by the operator of the communication network, said location information being obtained (E23) from an OFFER message according to the DHCP protocol sent in response to a DISCOVER message sent (E22) by said network access point to a DHCP server of the communication network,
- a storage module (MEM) adapted to memorize said certified location information,
- the communication module (COM) being configured to send (E26) to said equipment item said certified location information following the reception (E25) from said equipment item of a request for location information.

10. Terminal comprising a device according to Claim 9.

11. Method for obtaining location information implemented by an equipment item (EQ) that can be connected to a local area network of a network access point (PAR), said equipment item (EQ) being configured to access a communication network via said network access point (PAR) when said equipment item is connected to said local area network, the method comprising the following steps:
- sending (E25) to said network access point (PAR) a request for location information,
- receiving (E26) from said network access point (PAR) said location information, said location information being location information certified by an operator of the communication network, obtained by said network access point of a DHCP server of the communication network from an OFFER message according to the DHCP protocol sent (E23) by the DHCP server in response to a DISCOVER message sent (E22) by said network access point to the DHCP server.

12. Method for obtaining location information according to Claim 11, in which:
- the request for location information is included in an "OPTION" field of a message according to the DHCP protocol sent by a DHCP client of said equipment item to a DHCP server of the network access point.

13. Device for obtaining location information, that can be connected to a local area network of a network access point, said device being configured to access a communication network via said network access point when said device is connected to said local area network, the device comprising a communication module (COM4) configured to:
- send (E25) to said network access point a request for location information, and
- receive (E26) from said network access point said location information, said location information being location information certified by an operator of the communication network, and obtained by said network access point of a server DHCP of the communication network from an OFFER message according to the DHCP protocol sent (E23) by the DHCP server in response to a DISCOVER message sent (E22) by said network access point to the DHCP server.

14. Computer program comprising program code instructions for executing the steps of the method for supplying location information according to any one of Claims 1 to 8 or the steps of the method for obtaining location information according to either one of Claims 11 and 12, when the program is run by a processor.
